# EUROPEAN PATENT SPECIFICATION

(11) **EP 0 628 237 B1**
(45) Date of publication and mention of the grant of the patent: **27.08.1997**
(21) Application number: 94610031.0
(22) Date of filing: 08.06.1994
(51) Int. Cl.: A01B 73/00

(54) **A mower**
Mäher
Faucheuse

(30) Priority: 09.06.1993 DK 675/93; 23.12.1993 DK 1447/93
(43) Date of publication of application: 14.12.1994
(73) Proprietor: JF-FABRIKEN - J. FREUDENDAHL A/S, DK-6400 Sonderborg (DK)
(72) Inventor: Freudendahl, Jorn, DK-6400 Sonderborg (DK)
(74) Representative: Indahl, Peter Jensen

(56) References cited:
- GB-A- 2 194 872
- GB-A- 2 232 055
- US-A- 3 919 831
- US-A- 4 558 560

## Description

The present invention relates to a mower comprising a draw bar which is vertically pivotable about an axis close to the vertical centre plane of the mower in the driving direction during operation, driving wheels for carrying the mower during operation and transport wheels for carrying the mower during transport in a position substantially perpendicular to the operational position, the transport wheels being mounted at the end of each their carrier arm, which is mounted pivotally in such a way that the transport wheels are movable between an active position, in which they carry the mower, and an inactive position, in which they do not impede the movement of the draw bar in relation to the mower.

US Patent No. 4 986 064 discloses a mower of the above type, in which the carrier arms are mounted on the mower itself, in front and at the rear thereof, respectively, and in the inactive positions of the driving wheels said carrier arms extend forwards and backwards, respectively, in relation to the mower.

In mowers with a draw bar which is pivotal around an axis close to the vertical centre plane of the mower in the driving direction during operation and with driving wheels for carrying the mower during operation, it is a common problem that the point of gravity of the mower during operation will be close to a line between the point of mounting point of the draw bar on a tractor and the driving wheel farthest away from the track of the tractor. The mower is therefore inclined to tilt forwards. It is known to avoid this by placing a ballast at the other driving wheel. It is, however, clearly a disadvantage to make the mower more heavy than necessary considering its functioning as a mower.

The object of the invention is, therefore, to provide a mower of the type mentioned by way of introduction, said mower not suffering from the above general disadvantage in mowers with a pivotable draw bar.

The object is met by means of a mower according to claim 1.

Hereby is achieved that the transport wheels, when in their inactive position, contribute to moving the point of gravity of the mower backwards, the stability of the mower being thus improved.

In a preferred embodiment the carrier arms are mounted pivotally about a common shaft substantially perpendicular to the draw bar.

The transport wheels are preferably controllable when in their active position. Thereby an improved manoeuvrability is attained.

The invention will be explained in detail in the following with reference to the drawing, in which
Fig. 1 illustrates the above general problem,
Fig. 2 shows the mower according to the invention seen from above during operation,
Fig. 3 the mower in Fig. 2 seen from the side, and
Fig. 4 the mower seen from above in the transport position.

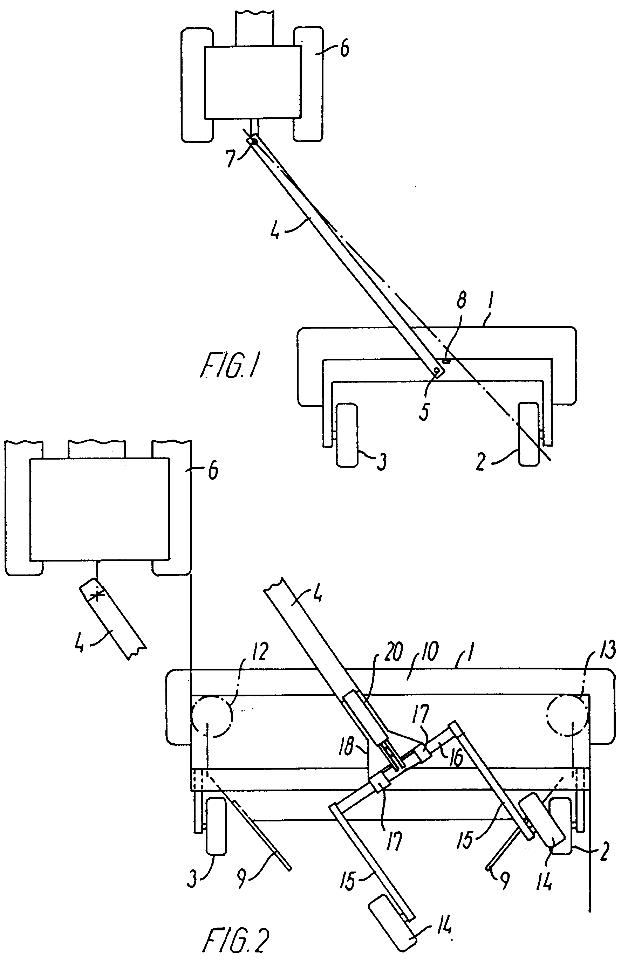

Fig. 1 shows a mower 1 known per se with driving wheels 2,3 and a draw bar 4, which is pivotal about a vertical axis 5 and connected with a tractor 6 in the point 7.

As will be seen from Fig. 1 the point of gravity 8 of the mower 1 is situated quite close to the connecting line between the connection point 7 and the driving wheel 2. This means that the mower will be inclined to tilt forwards. To avoid this, it is, as mentioned by way of introduction, known to place a ballast at the driving wheel 3.

Figs. 2-4 shows a mower which according to the invention is constructed in such a way that the use of ballast is avoided. In Figs. 2-4 the same reference numbers are used as in Fig. 1 for similar parts. The mower 1 in Figs. 2 - 4 is, in addition to what is shown in Fig. 1, provided with windrow screens 9 and a front flap 10, carrying a shielding collar 11. Moreover, a number of disc mowers are indicated at the two uttermost disc mowers 12 in the row, and a conditioning and throwing rotor 13 is likewise indicated.

The mower 1 according to the invention is provided with transport wheels 14 which are mounted on each their carrier arm 15, which in the case shown is fixedly mounted at each their end of a shaft 16 extending through eyes 17 on a carrier member 18 mounted on the draw bar 4. On the shaft 16 between the eyes 17 a lever arm 19 is fixedly mounted, said lever arm being movable by means of for instance a hydraulic cylinder 20 mounted on the draw bar 4.

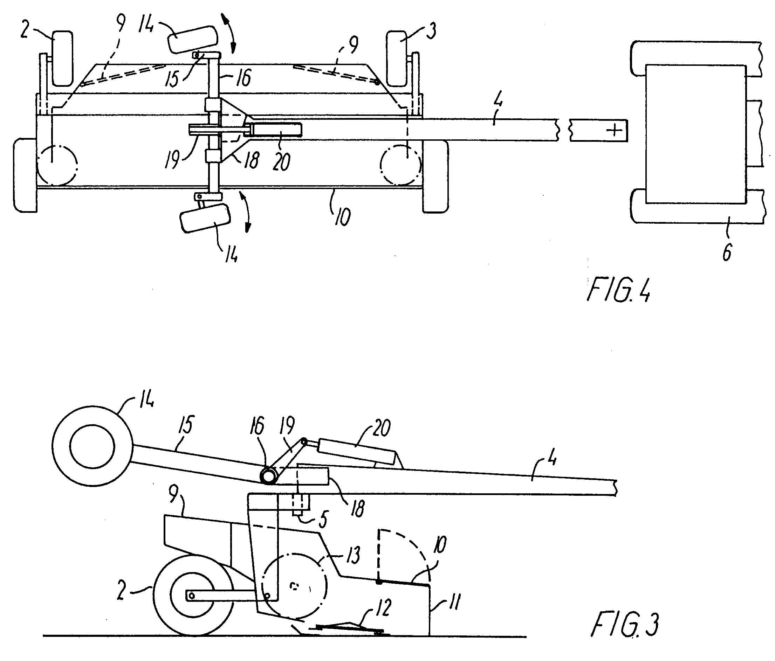

As will be seen from Figs. 2 and 3, the carrier arms 15 and simultaneously the transport wheels 14 are swingable into an inactive position above the mower 1 by the pulling in of the piston rod of the hydraulic cylinder 20. In that position the transport wheels 14 and their carrier arms 15 do not impede the movements of the mower, but contribute on the contrary to moving the point of gravity of the mower backwards, whereby the above-mentioned tendency of forwards tilting is reduced or removed.

In Fig. 4 the mower 1 is shown turned in a per se known manner into a transport position. The transport wheels 14 are lowered into an active position, and the carrier arms extend substantially vertically downwards. The swinging has been established by a pulling out of the piston rod of the hydraulic cylinder 20. To reduce the length of the mower, or, in the transport position, the width, the front flap 10 is raised into the vertical position indicated in Fig. 3 with a dotted line, and the windrow screens 9 have been swung close to the mower.

As shown in Fig. 4 the transport wheels 14 may be controllable. Thereby a better manoeuvrablity is attained, which for instance is advantageous when driving into a field through a narrow gate from a narrow road.

## Claims

1. A mower comprising a draw bar (4) which is vertically pivotable about an axis (5) close to the vertical centre plane of the mower in the driving direction during operation, driving wheels (2,3) for carrying the mower during operation and transport wheels (14) for carrying the mower during transport in a position substantially perpendicular to the operational position, the transport wheels (14) being mounted at the end of each their carrier arm (15), which is mounted pivotally in such a way that the transport wheels (14) are movable between an active position, in which they carry the mover, and an inactive position, in which they do not impede the movement of the draw bar (4) in relation to the mower, **characterized** in that the carrier arms (15) are mounted on either side of the draw bar (4) and adapted to extend backwards in the inactive position of the transport wheels such that the carrier arms and the transport wheels in their inactive position contribute to moving the point of gravity of the mower backwards, such that the tendency of forwards tilting of the mower is reduced or removed.

2. A mower according to claim 1, **characterized** in that the carrier arms (15) are mounted pivotally about a common shaft (16) substantially perpencidular to the draw bar (4).

3. A mower according to claims 1 or 2, **characterized** in that the transport wheels in their active position are controllably pivotal.

## Patentansprüche

1. Mäher, umfassend einen Zugbalken (4), der um eine nahe der senkrechten Mittelebene in der Fahrrichtung während des Betriebes des Mähers befindliche Achse (5) senkrecht drehbar ist, Fahrräder (2, 3) zum Tragen des Mähers unter dem Betrieb und Transporträder (14) zum Tragen des Mähers unter dem Transport in einer zur Betriebsstellung im wesentlichen rechtwinkeligen Stellung, wobei die Transporträder (14) an dem Ende ihres zugehörigen Tragarmes (15) montiert sind, der derart drehbar montiert ist, dass die Transporträder (14) zwischen einer aktiven Stellung, in der sie den Mäher tragen, und einer inaktiven Stellung, in der sie eine Bewegung des Zugbalkens (4) im Verhältnis zum Mäher nicht hindern, verstellbar sind, dadurch **gekennzeichnet**, dass die Tragarme (15) auf jeder Seite des Zugbalkens (4) montiert und dazu eingerichtet sind sich nach hinten in die inaktive Stellung der Transporträder zu erstrecken, wodurch die Tragarme und die Transporträder in ihrer inaktiven Stellung dazu beitragen den Schwerpunkt des Mähers nach hinten zu verlegen, und die Tendenz eines nach vorne Kippens des Mähers reduziert oder beseitigt wird.

2. Mäher nach Anspruch 1, dadurch **gekennzeichnet**, dass die Tragarme (15) um eine im wesentlichen senkrecht zum Zugbalken (4) liegende gemeinsame Welle (16) drehbar montiert sind.

3. Mäher nach Anspruch 1 oder 2, dadurch **gekennzeichnet**, dass die Transporträder in ihrer aktiven Stellung kontrollierbar drehbar sind.

## Revendications

1. Faucheuse comportant une barre d'attelage (4), qui est pivotable verticalement autour d'un axe (5) près du plan central vertical de la faucheuse dans le sens de conduite en cours d'emploi, des roues (2, 3) porteuses de la faucheuse en cours d'emploi et des roues (14) de transport de la faucheuse dans une position essentiellement perpendiculaire à sa position de travail, les roues de transport (14) étant montées à l'extrémité de chacune son bras de support (15), qui est monté de façon pivotable de manière telle que les roues de transport (14) sont déplaçables entre une position active, dans laquelle elles supportent la faucheuse, et une position inactive, dans laquelle elles ne gênent pas le mouvement de la barre d'attelage (4) par rapport à la faucheuse, **caractérisée** en ce que les bras de support (15) sont montés chacun de son coté de la barre d'attelage (4) et sont conçus pour, en position inactive des roues de transport, s'étendre vers l'arrière de manière telle que les bras de support et les roues de transport, dans leur position inactive, contribuent à déplacer le centre de gravité de la faucheuse vers l'arrière, si bien que la tendence de la faucheuse à basculer vers l'avant s'en trouve réduite ou éliminée.

2. Faucheuse selon la revendication 1, **caractérisée** en ce que les bras de support (15) sont montés à pivotement sur un arbre commun (16) essentiellement perpendiculaire à la barre d'attelage (4).

3. Faucheuse selon les revendications 1 ou 2, **caractérisée** en ce que les roues de transport dans leur position active sont pivotables de façon contrôlable.
